# EUROPÄISCHE PATENTSCHRIFT

(11) **EP 2 064 016 B1**
(45) Veröffentlichungstag und Bekanntmachung des Hinweises auf die Patenterteilung: **06.09.2017**
(21) Anmeldenummer: 07787422.0
(22) Anmeldetag: 12.07.2007
(51) Int. Cl.: B23D 59/04, B25F 5/00

(54) **HANDWERKZEUGMASCHINE**
HAND MACHINE-TOOL
MACHINE-OUTIL À MAIN

(30) Priorität: 04.09.2006 DE 102006041398
(43) Veröffentlichungstag der Anmeldung: 03.06.2009
(73) Patentinhaber: Robert Bosch GmbH, 70442 Stuttgart (DE)
(72) Erfinder: DELFINI, Stefano, CH-2544 Bettlach (CH); KAISER, Hans, CH-3297 Leuzigen (CH)
(86) Internationale Anmeldenummer: PCT/EP2007/057151
(87) Internationale Veröffentlichungsnummer: WO 2008/028714

(56) Entgegenhaltungen:
- DE-A1- 1 627 186
- DE-A1- 4 107 110
- DE-A1-102004 034 814
- DE-C1- 3 734 013
- GB-A- 778 019
- JP-A- 58 137 511
- JP-A- 60 076 913
- US-A- 3 085 603

## Beschreibung

### Stand der Technik

Die Erfindung betrifft eine Handwerkzeugmaschine nach dem Oberbegriff des Anspruchs 1.

Aus der DE 10 2004 034 814 A1 ist eine Handwerkzeugmaschine mit einem Gehäuse, einem in dem Gehäuse angeordneten Motor zum Antreiben eines Einsatzwerkzeugs und mit einer Pumpeneinheit zum Antreiben eines Kühl- und/oder Schmiermittelstroms zum Kühlen und/oder Schmieren stark belasteter Bauteile bekannt. Die Pumpeneinheit ist außerhalb der Handwerkzeugmaschine und ihres Gehäuses angeordnet und ein Luftstrom, der ein Transportmittel für den Kühl- und/oder Schmiermittelstrom bildet, wird über einen Schlauch der Handwerkzeugmaschine zugeführt.

Die Erfindung geht aus von einer Handwerkzeugmaschine mit einem Gehäuse, einem in dem Gehäuse angeordneten Motor zum Antreiben eines Einsatzwerkzeugs und mit einer Pumpeneinheit zum Antreiben eines Kühl- und Schmiermittelstroms zum Kühlen und Schmieren von zumindest einem stark belasteten Bauteil. Dabei soll unter einem "stark belasteten Bauteil" insbesondere das Einsatzwerkzeug und/oder eine Lager- und/oder Führungseinheit insbesondere eines Werkzeugs der Handwerkzeugmaschine verstanden werden.

Es wird vorgeschlagen, dass die Pumpeneinheit in dem Gehäuse angeordnet ist. Dadurch können eine externe Pumpeneinheit und ein Schlauch zum Zuführen des Kühl- und Schmiermittelstroms von der Pumpeneinheit zu der Handwerkzeugmaschine entfallen. Die Schmierung und Kühlung der Handwerkzeugmaschine bzw. des zu kühlenden Bauteils kann weniger defektanfällig gestaltet werden, wodurch die mittlere Lebensdauer der die Schmierung und Kühlung bewirkenden Elemente der Handwerkzeugmaschine verlängert werden kann.

Die Erfindung ist besonders vorteilhaft im Bereich der handgeführten Elektrosägen, beispielsweise Stichsägen, Fuchsschwänzen oder Säbelsägen, einsetzbar. Prinzipiell wäre jedoch auch ein Einsatz in anderen Geräten denkbar, beispielsweise Bohrmaschinen oder Schleifgeräten.

Auf einen separaten Motor kann verzichtet werden, wenn die Pumpeneinheit eine Antriebsverbindung zu dem Motor aufweist. Die Antriebsverbindung kann beispielsweise durch einen Keilriemen, einen Zahnriemen, ein Getriebe oder durch eine unmittelbare Verbindung einer beispielsweise als Turbinenrad ausgebildeten Pumpeneinheit mit der Motorwelle oder mit einer anderen Welle im Antriebsstrang der Handwerkzeugmaschine hergestellt sein.

Durch die erfindungsgemäße Kühlung und Schmierung kann eine Verlängerung der Lebensdauer der Handwerkzeugmaschine insbesondere dann erreicht werden, wenn das stark belastete Bauteil als Sägeblattführungseinheit zum Führen eines als Sägeblatt ausgebildeten Einsatzwerkzeugs ausgebildet ist.

Durch die erfindungsgemäße Kühlung und Schmierung kann eine Verlängerung der Lebensdauer des Einsatzwerkzeugs der Handwerkzeugmaschine erreicht werden.

Eine kostengünstige Kühlung und Schmierung wird mit einer Pumpeneinheit erreicht, die zum Erzeugen eines Luftstroms vorgesehen ist. Unter "vorgesehen" soll in diesem Zusammenhang auch "ausgelegt" und "ausgestattet" verstanden werden. Dadurch, dass die Handwerkzeugmaschine ein Mittel zum Beimischen von Schmiermitteltröpfchen zum Lufstrom umfasst, können eine vorteilhafte Minimalmengenschmierung und eine gleichzeitige Kühlung durch den Luftstrom erreicht werden.

Das Mittel umfasst als wesentliches Element eine Venturidüse. Dadurch ist das Mittel konstruktiv einfach zu realisieren und wird eine kleine Tröpfchengröße des Schmiermittels gewährleistet. Dabei kann eine Minimalmengenschmierung, die bei dem geringsten möglichen Schmiermittelverbrauch eine deutliche Verlängerung der Lebensdauer der belasteten Bauteile ermöglicht, insbesondere dadurch erreicht werden, dass die Venturidüse derart dimensioniert ist, dass dem Luftstrom im Betrieb weniger als ein Gramm eines Schmiermittels pro Betriebsstunde beigemischt wird.

Durch einen innerhalb des Gehäuses angeordneten Schmiermittelbehälter kann insbesondere das Material des Gehäuses selbst unabhängig von der chemischen Beschaffenheit des Schmiermittels gewählt werden, das beispielsweise einen fett- und ölhaltigen Schmierstoff, Graphit oder Ähnliches beinhalten kann. Der separate Schmiermittelbehälter kann ferner austauschbar oder zum Nachfüllen entnehmbar sein.

Umfasst die Handwerkzeugmaschine eine Nachfüllöffnung zum Nachfüllen von Schmiermittel in den Schmiermittelbehälter, kann auf eine Entnahme des Schmiermittelbehälters zum Nachfüllen von Schmierstoff verzichtet werden.

Ein Austausch eines leeren Schmiermittelbehälters durch einen vollen Schmiermittelbehälter ist einfach erreichbar, wenn der Schmiermittelbehälter lösbar, und zwar insbesondere manuell bzw. werkzeugfrei lösbar, mit dem Gehäuse verbunden ist.

Dabei kann der Austausch insbesondere dann einfach erfolgen, wenn der Schmiermittelbehälter als austauschbare Schmiermittelpatrone ausgebildet ist. Die Schmiermittelpatrone kann beispielsweise durch eine sich beim Einstecken der Schmiermittelpatrone in eine entsprechende Öffnung des Gehäuses selbsttätig öffnende Verschlussöffnung charakterisiert sein.

Umfasst die Handwerkzeugmaschine ein Einstellelement zum Einstellen wenigstens einer Kenngröße des Kühl- und Schmiermittelstroms, kann diese Kenngröße abhängig von dem aktuellen Einsatzgebiet der Handwerkzeugmaschine, beispielsweise abhängig von einem zu bearbeitenden Material, gewählt werden. Das Einstellelement kann besonders vorteilhaft mit Symbolen ausgestattet sein, die das zu bearbeitende Material kennzeichnen.

Dabei ist die einstellbare Kenngröße vorteilhaft derart gewählt, dass das Einstellelement zum Einstellen einer in dem Kühl- und Schmiermittelstrom transportierten Schmiermittelmenge vorgesehen ist.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Handwerkzeugmaschine mit einem Gehäuse und einer in dem Gehäuse angeordneten Pumpeneinheit nach einem ersten Ausführungsbeispiel der Erfindung und
- Fig. 2: eine Handwerkzeugmaschine mit einem Gehäuse und einer in dem Gehäuse angeordneten Pumpeneinheit nach einem zweiten Ausführungsbeispiel der Erfindung.

### Beschreibung der Ausführungsbeispiele

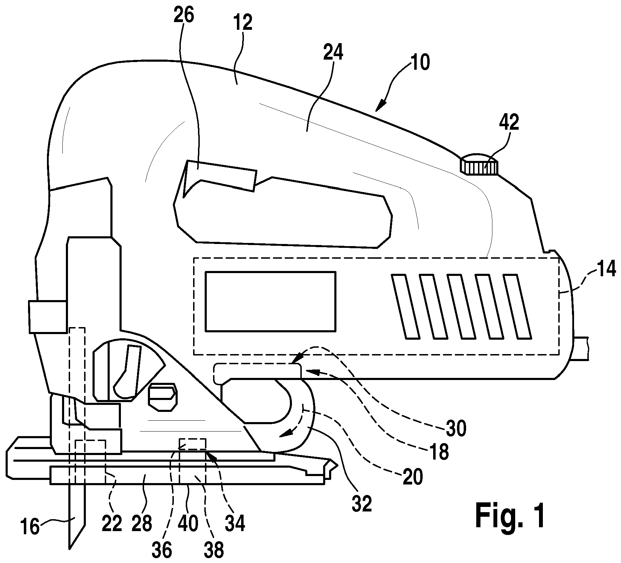

Figur 1 zeigt eine als Stichsäge ausgebildete Handwerkzeugmaschine 10 mit einem Gehäuse 12, einem in dem Gehäuse 12 angeordneten Motor 14 zum Antreiben eines Einsatzwerkzeugs 16 und mit einer Pumpeneinheit 18 zum Antreiben eines Kühl- und Schmiermittelstroms 20 zum Kühlen und/oder Schmieren stark belasteter Bauteile 22.

Die Pumpeneinheit 18 der Handwerkzeugmaschine 10 ist als Turbinenrad ausgebildet und innerhalb des Gehäuses 12 angeordnet.

Das Gehäuse 12 umfasst ferner einen Handgriff 24 zum Führen der Handwerkzeugmaschine 10 und einen im Bereich des Handgriffs 24 angeordneten Ein-/Ausschalter 26. Neben dem Gehäuse 12 umfasst die Handwerkzeugmaschine 10 eine Fußplatte 28 zum Führen der Handwerkzeugmaschine 10 auf einer Oberfläche eines Werkstücks (hier nicht dargestellt), wobei die Fußplatte 28 vorzugsweise aus Druckguss besteht.

Die Pumpeneinheit 18 ist über ein Zahnradgetriebe mit einer Antriebswelle des Motors 14 verbunden, so dass sie eine Antriebsverbindung 30 zu dem als Elektromotor ausgebildeten Motor 14 aufweist. Die Antriebsverbindung 30 ist derart gestaltet, dass immer dann, wenn der Motor 14 betrieben wird, notwendigerweise auch die Pumpeneinheit 18 betrieben wird.

Eines der von dem Kühl- und Schmiermittelstrom 20 gekühlten und geschmierten, stark belasteten Bauteile 22 der Handwerkzeugmaschine 10 ist als Sägeblattführungseinheit ausgebildet. Die Sägeblattführungseinheit führt im Betrieb ein als Sägeblatt ausgebildetes Einsatzwerkzeug 16 in einer an sich bekannten Weise pendelnd nach oben und unten.

Die Pumpeneinheit 18 ist zum Erzeugen eines Luftstroms vorgesehen, und zwar in der Weise, dass sie Luft durch einen Filter oder ein Gitter von außen ansaugt und unter hohem Druck in eine Kühlluftleitung 32 einleitet.

Die Kühlluftleitung 32 verläuft teilweise außerhalb des Gehäuses 12 und mündet in die Fußplatte 28, zu welcher sie in einem Endbereich parallel verläuft.

Die Kühlluftleitung 32 führt den Luftstrom durch ein Mittel 34 zum Beimischen von Schmiermitteltröpfchen zum Luftstrom. Das Mittel 34 umfasst als zentrales Element eine hier nur schematisch dargestellte Venturidüse 36.

Die Venturidüse 36 ist derart dimensioniert, dass dem Luftstrom im Betrieb weniger als ein Gramm eines Schmiermittels pro Betriebsstunde beigemischt wird, so dass während eines ganztägigen Dauerbetriebs der Handwerkzeugmaschine 10 nur etwa ein Fingerhut voll des Schmiermittels von dem Kühlluftstrom mitgerissen wird und zu den stark belasteten, zu kühlenden Bauteilen 22 getragen wird. Dort schlägt sich das in kleinen Tröpfchen im Kühlluftstrom transportierte Schmiermittel auch auf der Oberfläche der zu schmierenden, stark belasteten Bauteile 22 bzw. des Einsatzwerkzeugs 16 nieder und führt zu einer Minimalmengenschmierung, die eine Lebensdauer der Bauteile 22 bzw. des Einsatzwerkzeugs 16 deutlich erhöht. Gleichzeitig sorgt der überwiegende Luftanteil des aus Luft und Schmiermittel bestehenden Kühl- und Schmiermittelstroms 20 für eine Kühlung der betreffenden Bauteile 22 bzw. des Einsatzwerkzeugs 16. Dadurch wird der Verschleiß insbesondere am Einsatzwerkzeug 16 verringert und die Lebensdauer der gesamten Handwerkzeugmaschine 10 bzw. der betreffenden Bauteile 22 weiter erhöht.

Das Schmiermittel wird dem Kühl- und Schmiermittelstrom 20 über die Venturidüse 36 aus einem innerhalb des Gehäuses 12 angeordneten Schmiermittelbehälter 38 zugeführt, der in einem hier nur gestrichelt dargestellten Ausführungsbeispiel eine Nachfüllöffnung 40 zum Nachfüllen von Schmiermittel in den Schmiermittelbehälter 38 umfasst.

In dem in Figur 1 dargestellten Ausführungsbeispiel ist der Schmiermittelbehälter 38 lösbar mit dem Gehäuse 12 verbunden und ist zudem als austauschbare Schmiermittelpatrone ausgebildet. Die Bauart der Schmiermittelpatrone, die eine Plastikhülse und eine Verschlusskugel umfasst, kann beispielsweise der Bauart von bekannten Tintenpatronen für Füllfederhalter ähneln.

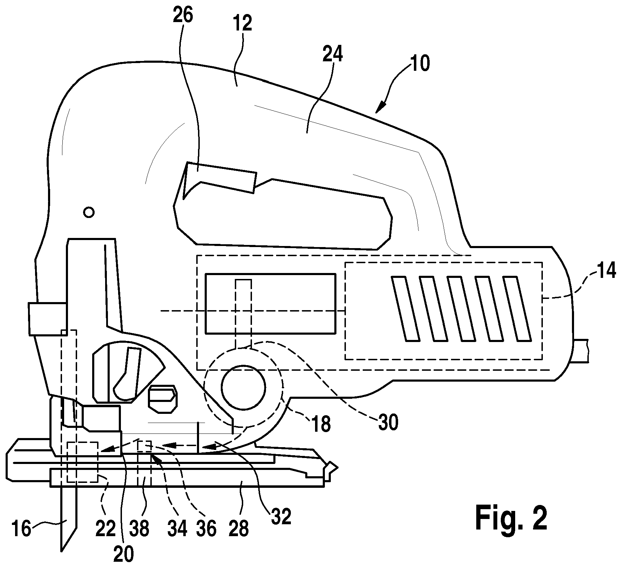

Figur 2 zeigt ein alternatives Ausführungsbeispiel der Erfindung, in welchem im Bereich eines Handgriffs 24 des Gehäuses 12 der Handwerkzeugmaschine 10 ein Einstellelement 42 (Figur 1) zum Einstellen wenigstens einer Kenngröße des Kühl- und/oder Schmiermittelstroms 20, und zwar einer Intensität der durch das Schmiermittel erzeugten Minimalmengenschmierung, vorgesehen ist.

In dem Ausführungsbeispiel nach Figur 2 ist die Pumpeneinheit 18 mit einem um eine horizontale, senkrecht zur Längserstreckung des Einsatzwerkzeugs 16 verlaufende Drehachse drehbaren Turbinenrad ausgestattet.

Über das Einstellelement 42 (Figur 1) kann ein Querschnitt einer Engstelle der Venturidüse 36 variiert werden. Dadurch variiert ein Unterdruck an einer Mündung des Schmiermittelbehälters 38, der durch den Druck in der Engstelle der Venturidüse 36 bestimmt ist. Durch die Änderung des Unterdrucks ändert sich die aus dem Schmiermittelbehälter 38 und in dem Kühl- und Schmiermittelstrom 20 transportierte Schmiermittelmenge.

## Patentansprüche

1. Handwerkzeugmaschine mit einem Gehäuse (12), einem in dem Gehäuse (12) angeordneten Motor (14) zum Antreiben eines Einsatzwerkzeugs (16) und mit einer Pumpeneinheit (18) zum Antreiben eines Kühl- und Schmiermittelstroms (20) zum Kühlen und Schmieren wenigstens eines stark belasteten Bauteils (22), **dadurch gekennzeichnet, dass** die Pumpeneinheit (18) in dem Gehäuse (12) angeordnet ist und zum Erzeugen eines Luftstroms vorgesehen ist, wobei die Handwerkzeugmaschine eine Venturidüse (36) zum Beimischen von Schmiermitteltröpfchen zum Luftstrom umfasst.

2. Handwerkzeugmaschine nach Anspruch 1, **dadurch gekennzeichnet, dass** die Pumpeneinheit (18) eine Antriebsverbindung (30) zu dem Motor (14) aufweist.

3. Handwerkzeugmaschine nach einem der vorhergehenden Ansprüche, **dadurch gekennzeichnet, dass** das stark belastete Bauteil (22) als Sägeblattführungseinheit zum Führen eines als Sägeblatt ausgebildeten Einsatzwerkzeugs (16) ausgebildet ist.

4. Handwerkzeugmaschine nach einem der vorhergehenden Ansprüche, **dadurch gekennzeichnet, dass** das stark belastete Bauteil (22) als Einsatzwerkzeug (16) ausgebildet ist.

5. Handwerkzeugmaschine nach einem der vorhergehenden Ansprüche, **dadurch gekennzeichnet, dass** die Venturidüse (36) derart dimensioniert ist, dass dem Luftstrom im Betrieb weniger als ein Gramm eines Schmiermittels pro Betriebsstunde beigemischt wird.

6. Handwerkzeugmaschine nach einem der vorhergehenden Ansprüche, **gekennzeichnet durch** einen innerhalb des Gehäuses (12) angeordneten Schmiermittelbehälter (38).

7. Handwerkzeugmaschine nach Anspruch 6, **gekennzeichnet durch** eine Nachfüllöffnung (40) zum Nachfüllen von Schmiermittel in den Schmiermittelbehälter (38).

8. Handwerkzeugmaschine nach einem der vorhergehenden Ansprüche, **dadurch gekennzeichnet, dass** der Schmiermittelbehälter (38) lösbar mit dem Gehäuse (12) verbunden ist.

9. Handwerkzeugmaschine nach Anspruch 8, **dadurch gekennzeichnet, dass** der Schmiermittelbehälter (38) als austauschbare Schmiermittelpatrone ausgebildet ist.

10. Handwerkzeugmaschine nach einem der vorhergehenden Ansprüche, **gekennzeichnet durch** ein Einstellelement (42) zum Einstellen wenigstens einer Kenngröße des Kühl- und/oder Schmiermittelstroms (20).

11. Handwerkzeugmaschine nach Anspruch 10, **dadurch gekennzeichnet, dass** das Einstellelement (42) zum Einstellen einer in dem Kühl- und/oder Schmiermittelstrom (20) transportierten Schmiermittelmenge vorgesehen ist.

## Claims

1. Portable power tool with a housing (12), a motor (14) arranged in the housing (12) for driving an insertion tool (16), and with a pump unit (18) for driving a coolant and lubricant flow (20) for cooling and lubricating at least one heavily loaded component (22), **characterized in that** the pump unit (18) is arranged in the housing (12) and is provided for generating an air flow, wherein the portable power tool comprises a Venturi nozzle (36) for mixing lubricant droplets with the air flow.

2. Portable power tool according to Claim 1, **characterized in that** the pump unit (18) has a drive connection (30) to the motor (14).

3. Portable power tool according to either of the preceding claims, **characterized in that** the heavily loaded component (22) is designed as a saw blade guide unit for guiding an insertion tool (16) designed as a saw blade.

4. Portable power tool according to one of the preceding claims, **characterized in that** the heavily loaded component (22) is designed as an insertion tool (16).

5. Portable power tool according to one of the preceding claims, **characterized in that** the Venturi nozzle (36) is dimensioned in such a manner that, during operation, less than 1 gram of a lubricant is mixed with the air flow per operating hour.

6. Portable power tool according to one of the preceding claims, **characterized by** a lubricant container (38) arranged within the housing (12).

7. Portable power tool according to Claim 6, **characterized by** a refilling opening (40) for refilling lubricant into the lubricant container (38).

8. Portable power tool according to one of the preceding claims, **characterized in that** the lubricant container (38) is releasably connected to the housing (12).

9. Portable power tool according to Claim 8, **characterized in that** the lubricant container (38) is designed as a replaceable lubricant cartridge.

10. Portable power tool according to one of the preceding claims, **characterized by** a setting element (42) for setting at least one characteristic variable of the coolant and/or lubricant flow (20).

11. Portable power tool according to Claim 10, **characterized in that** the setting element (42) is provided for setting a quantity of lubricant transported in the coolant and/or lubricant flow (20).

## Revendications

1. Machine-outil à main comprenant un boîtier (12), un moteur (14) disposé dans le boîtier (12) pour entraîner un outil rapporté (16) et comprenant une unité de pompe (18) pour entraîner un courant de réfrigérant et de lubrifiant (20) pour refroidir et lubrifier au moins un composant fortement sollicité (22), **caractérisée en ce que** l'unité de pompe (18) est disposée dans le boîtier (12) et est prévue pour générer un courant d'air, la machine-outil à main présentant comprenant une buse Venturi (36) pour mélanger des gouttelettes de lubrifiant avec le courant d'air.

2. Machine-outil à main selon la revendication 1, **caractérisée en ce que** l'unité de pompe (18) présente une liaison d'entraînement (30) avec le moteur (14).

3. Machine-outil à main selon l'une quelconque des revendications précédentes, **caractérisée en ce que** le composant fortement sollicité (22) est réalisé sous forme d'unité de guidage de lame de scie pour guider un outil rapporté (16) réalisé sous forme de lame de scie.

4. Machine-outil à main selon l'une quelconque des revendications précédentes, **caractérisée en ce que** le composant fortement sollicité (22) est réalisé sous forme rapportée (16).

5. Machine-outil à main selon l'une quelconque des revendications précédentes, **caractérisée en ce que** la buse Venturi (36) est dimensionnée de telle sorte que moins d'un gramme d'un lubrifiant par heure de fonctionnement soit mélangé au courant d'air pendant le fonctionnement.

6. Machine-outil à main selon l'une quelconque des revendications précédentes, **caractérisée par** un récipient de lubrifiant (38) disposé à l'intérieur du boîtier (12).

7. Machine-outil à main selon la revendication 6, **caractérisée par** une ouverture de remplissage (40) pour le remplissage de lubrifiant dans le récipient de lubrifiant (38).

8. Machine-outil à main selon l'une quelconque des revendications précédentes, **caractérisée en ce que** le récipient de lubrifiant (38) est raccordé de manière détachable au boîtier (12).

9. Machine-outil à main selon la revendication 8, **caractérisée en ce que** le récipient de lubrifiant (38) est réalisé sous forme de cartouche de lubrifiant remplaçable.

10. Machine-outil à main selon l'une quelconque des revendications précédentes, **caractérisée par** un élément de réglage (42) pour régler au moins une grandeur caractéristique du courant de réfrigérant et/ou de lubrifiant (20).

11. Machine-outil à main selon la revendication 10, **caractérisée en ce que** l'élément de réglage (42) est prévu pour régler une quantité de lubrifiant transportée dans le courant de réfrigérant et/ou de lubrifiant (20).
